# EUROPEAN PATENT APPLICATION

(11) **EP 2 031 505 A2**
(43) Date of publication of application: **04.03.2009**
(21) Application number: 08163342.2
(22) Date of filing: 29.08.2008
(51) Int. Cl.: G06F 9/445

(54) **Transmission apparatus, transmission method and computer program**

(30) Priority: 31.08.2007 JP 2007226659
(71) Applicant: Canon Kabushiki Kaisha, Tokyo 146-8501 (JP)
(72) Inventor: Igarashi, Toshiaki c/o CANON KABUSHIKI KAISHA, Ohta-ku Tokyo (JP)
(74) Representative: Sharp, Alan Cooper

(57) **Abstract**

A transmission apparatus (101) including a first transmission means configured to transmit software to a device, a confirmation means configured to confirm that transmission of the software was successful based on information received from the device to which the software was transmitted by the first transmission means, and a second transmission means configured to, after the transmission of the software was confirmed to have been successful by the confirmation means, transmit the software to a device which is different from the device to which software was transmitted by the first transmission means.

## Description

### BACKGROUND OF THE INVENTION

### Field of the Invention

The present invention relates to a transmission apparatus, a transmission method and a computer program, and especially may be useful to transmit various kinds of software, represented by firmware, to one or more devices which are connected to a network.

### Description of the Related Art

To improve the functions of a device such as a multifunction peripheral, copying machine, and printer, the person in charge of maintaining the device downloads to the device various kinds of data (software) notably firmware.

In the most basic firmware update method, first, the person in charge of maintaining the device connects an exclusive firmware download tool to the device. Then, the firmware is updated by transferring new firmware to the device from the firmware download tool.

Here, if a plurality of firmware update target devices exist, there is an update method in which the person in charge of maintaining the devices does not update the firmware for all of the devices, and updates only the firmware for some of the devices.

This method is a technique taken to suppress the impact of an unsuccessful firmware update as much as possible. Specifically, in this method, a device which has finished a firmware update is allowed to operate for a fixed period of time, and once that firmware update is confirmed to be operating correctly, the firmware of the remaining devices is updated.

On the other hand, recently, as network environments have become more developed, technology for transmitting various kinds of data represented by firmware to a device from a remote transmission apparatus has been realized (refer to Japanese Patent Application Laid-Open Nos. 2002-132511 and 2004-139572).

Japanese Patent Application Laid-Open No. 2002-132511 provides a program update system in which a remote transmission apparatus transmits to a device an update program of the service provided by the device. In this program update system, from among a plurality of devices in a store (intranet), a representative device which is not providing the service representatively acquires an update program for that service from a transmission apparatus, and transfers the update program to the other devices. As a result, even when the update program of the service is transmitted from a remote location, simultaneous suspension of service in the plurality of devices installed in the store can be prevented.

Further, Japanese Patent Application Laid-Open No. 2004-139572 provides a remote management system wherein a firmware management apparatus sends an update date/time to a mediation device. In this remote management system, when the update date/time is reached, the mediation device acquires firmware from the firmware management apparatus, writes the firmware in a storage unit, sends the firmware to an image formation apparatus, and updates the firmware. As a result, since the firmware updates are carried out by providing time intervals, a reduction in operating rate due to firmware updates of a device can be avoided.

However, in the most basic firmware update method, the person in charge of maintaining a device has to carry out the firmware update operation two or more times. Therefore, a large burden is placed on the person in charge of maintaining the device.

In the program update system discussed in Japanese Patent Application Laid-Open No. 2002-132511, since transmission of the update program can be carried out automatically, the burden placed on the person in charge of maintaining a device is reduced. However, a representative device at a starting point which receives the update program from the transmission apparatus can receive the update program from the transmission apparatus even if it is not the application target of the update program. Thus, whether that update program is operating correctly has to be separately confirmed by applying the update program to all of the starting point devices. It is noted that in the following description, the expression "person in charge of maintaining a device" is collectively termed "user".

In addition, in the remote management system discussed in Japanese Patent Application Laid-Open No. 2004-139572, transmission of the firmware can be carried out in stages by designating the times for transmission of the firmware. Thus, the firmware is transmitted to some of the devices at a first designated time, and once the devices are confirmed to be operating correctly, the firmware can be transmitted to the remaining devices at a second designated time. However, if the firmware which was transmitted at the first designated time is not found to be operating correctly, the user must instruct the firmware management apparatus to stop the transmission of firmware for the second designated time.

### SUMMARY OF THE INVENTION

The present invention is directed to reducing the load placed on a user when transmitting software such as firmware to a plurality of devices, and carrying out the transmission of that software expeditiously and appropriately.

The present invention in its first aspect provides a transmission apparatus as specified in claims 1 to 12.

[0013a] The present invention in its second aspect provides a transmission method as specified in claim 13.

Further features and aspects of the present invention will become apparent from the following detailed description of exemplary embodiments with reference to the attached drawings.

### BRIEF DESCRIPTION OF THE DRAWINGS

The accompanying drawings, which are incorporated in and constitute a part of the specification, illustrate exemplary embodiments, features, and aspects of the invention and, together with the description, serve to explain the principles of the invention.

Fig. 1 is a diagram illustrating one example of the configuration of the software transmission system according to an exemplary embodiment of the present invention.

Fig. 2 is a diagram illustrating one example of the internal configuration of the firmware transmission apparatus according to an exemplary embodiment of the present invention.

Fig. 3 is a diagram illustrating one example of the internal configuration of the device according to an exemplary embodiment of the present invention.

Fig. 4 is a block diagram illustrating one example of the functional configuration of the firmware transmission system according to an exemplary embodiment of the present invention.

Fig. 5 is a diagram illustrating one example of the registered contents of the device grouping production condition table according to an exemplary embodiment of the present invention.

Fig. 6 is a diagram illustrating one example of the reference device selection conditions table according to an exemplary embodiment of the present invention.

Fig. 7 is a diagram illustrating one example of the analogous device transmission condition table according to an exemplary embodiment of the present invention.

Fig. 8 is a diagram illustrating one example of the device information table according to an exemplary embodiment of the present invention.

Fig. 9 is a flowchart describing one example of the operation in a firmware transmission apparatus when firmware is being transmitted to a plurality of devices according to an exemplary embodiment of the present invention.

Fig. 10 is a diagram illustrating one example of the firmware transmission condition selection screen according to an exemplary embodiment of the present invention.

Fig. 11 is a diagram illustrating one example of the device grouping display screen according to an exemplary embodiment of the present invention.

Fig. 12 is diagram illustrating one example of a firmware transmission result presentation screen according to an exemplary embodiment of the present invention.

### DETAILED DESCRIPTION OF THE EMBODIMENTS

Various exemplary embodiments, features, and aspects of the invention will be described in detail below with reference to the drawings.

### First Exemplary Embodiment

In the exemplary embodiment of the present invention, a firmware transmission apparatus is described by giving an example of the operations during the transmission of firmware, as one example of software, to a plurality of devices.

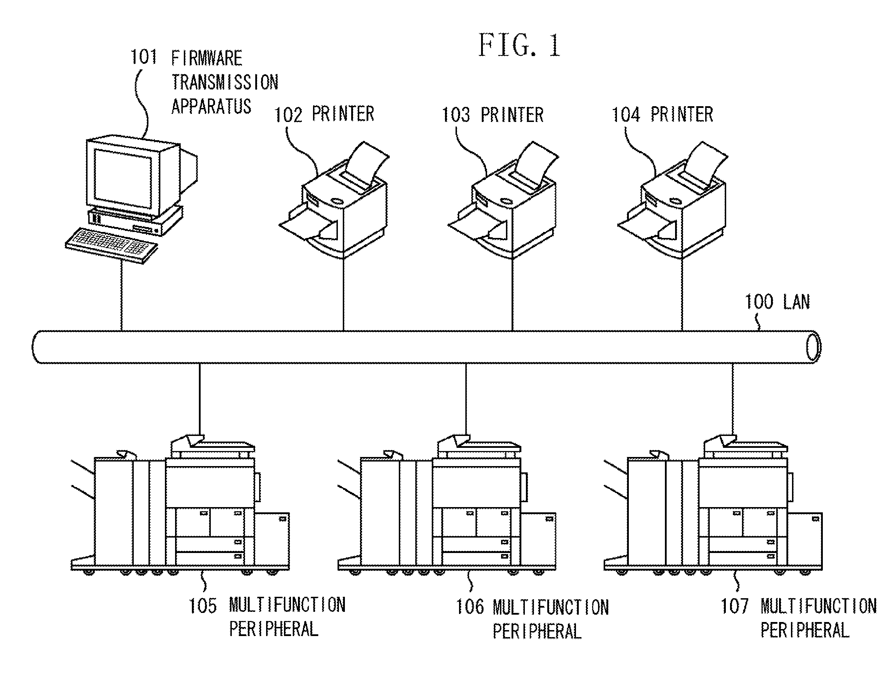

Fig. 1 is a diagram illustrating one example of a configuration of a software transmission system.

In Fig. 1, the software transmission system has a firmware transmission apparatus 101, printers 102 to 104, and multifunction peripherals 105 to 107 connected to a network by a local area network (LAN) 100. In the present exemplary embodiment, the printers 102 to 104 and the multifunction peripherals 105 to 107 are provided as the devices.

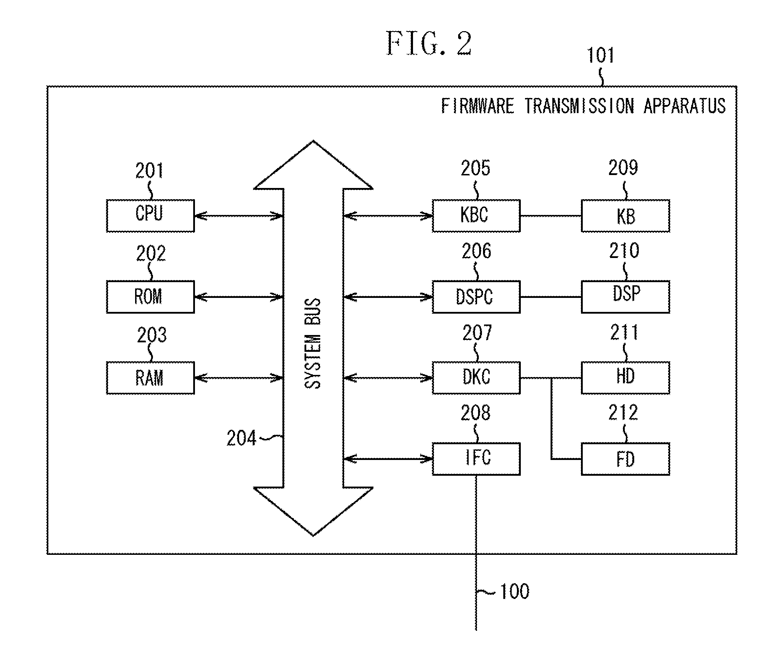

Fig. 2 is a diagram illustrating one example of the internal configuration of the firmware transmission apparatus 101.

The firmware transmission apparatus 101 is realized by, for example, a personal computer (PC). A firmware transmission software program according to the present exemplary embodiment, which is the operating entity in all of the following description, is stored in a hard disk (HD) 211. In all of the following description, unless otherwise stated, the hardware entity which executes the processing is a central processing unit (CPU) 201. On the other hand, the software control entity is the firmware transmission software stored in the HD 211.

A random access memory (RAM) 203 functions as the main memory of the CPU 201 and as a work area etc. A keyboard controller (KBC) 205 controls the instruction inputs from a keyboard (KB) 209, pointing device (not shown), and the like. A display controller (DSPC) 206 controls the display of a display (DSP) 210. A disk controller (DKC) 207 controls access to a storage device such as a compact disk - read only memory (CD-ROM) (not shown), the HD 211, or a floppy disk controller 212. The HD 211, the floppy disk controller 212, and the like store a boot program, an operating system, firmware transmission application and data thereof etc. An interface controller 208 sends and receives information to and from the other network devices via the LAN 100.

In the present exemplary embodiment, although the operating system (OS) is assumed to be Windows^{®}, the OS is not limited to Windows^{®}.

Further, the firmware transmission program according to the present exemplary embodiment may also be supplied in a form stored on a recording medium, such as a floppy disk or a CD-ROM. In such a case, the program is read from the recording medium by the floppy disk controller 212 illustrated in Fig. 2, the CD-ROM drive (not shown) or the like, and installed onto the HD 211.

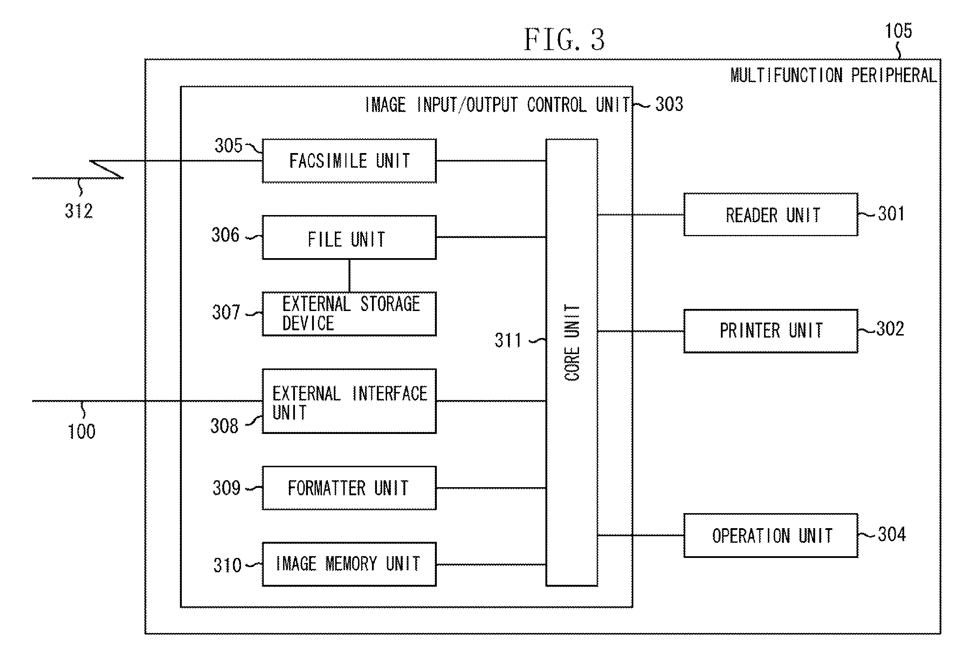

Fig. 3 is a diagram illustrating one example of the internal configuration of the device. Here, the device will be described using the multifunction peripheral 105 as an example. It is noted that the multifunction peripherals 106 and 107 have the same configuration as the multifunction peripheral 105, and the printers 102 to 104 have only the function of the printer in the multifunction peripheral 105. Thus, a detailed description of the multifunction peripherals 106 and 107 and the printers 102 to 104 will be omitted.

In Fig. 3, the multifunction peripheral 105 integrates the functions of a scanner, printer, copier, and facsimile. The multifunction peripheral 105 is connected to other network devices (communication devices) via a public line 312. Specifically, the multifunction peripheral 105 mainly includes a reader unit 301, a printer unit 302, an image input/output control unit 303, and an operation unit 304.

The reader unit 301 realizes the scan function, and is connected to the image input/output control unit 303. The reader unit 301 reads image data of an original based on an instruction from the operation unit 304, and outputs the read image data to the image input/output control unit 303.

The printer unit 302 realizes the printer function, and prints image data output from the image input/output control unit 303 onto recording paper.

The image input/output control unit 303 is connected to the LAN 100 or the public line 312, and inputs and outputs image data. In addition, the image input/output control unit 303 performs job analysis and control. The image input/output control unit 303 also realizes a rendering function. The component elements of the image input/output control unit 303 include a facsimile unit 305, a file unit 306, an external interface unit 308, a page description language (PDL) formatter unit 309, an image memory unit 310, and a core unit 311.

The operation unit 304 receives an input operation from a user.

The facsimile unit 305 is connected to the core unit 311 and the public line 312. The facsimile unit 305 decompresses compressed image data received from the public line 312 and sends the decompressed image data to the core unit 311. Additionally, the facsimile unit 305 compresses image data sent from the core unit 311 and sends the compressed image data to another network device via the public line 312.

The file unit 306 is connected to the core unit 311 and an external storage device 307. The file unit 306 stores image data sent from the core unit 311 along with a keyword for searching for this image data in the external storage device 307 which can be configured by a hard disk or the like. The file unit 306 also reads out image data stored in the external storage device 307 based on a keyword sent from the core unit 311, and sends the read image data to the core unit 311.

The external interface unit 308 is an interface between other network devices and the core unit 311. Job control data and image data are sent to and received from other network devices through the external interface unit 308. Examples of job control data include a job control instruction sent together with PDL data. For example, the job control instruction may be to rasterize PDL data, print out the rasterized data as image data, then staple, sort and eject the printed paper.

The formatter unit 309 is connected to the core unit 311. For example, the formatter unit 309 rasterizes PDL data sent from another network device into image data which can be printed by the printer unit 302. The image memory unit 310 temporarily stores information from the reader unit 301 and information sent from another network device via the external interface unit 308.

The core unit 311 controls the data flowing among the reader unit 301, the operating unit 304, the facsimile unit 305, the file unit 306, the external interface unit 308, the formatter unit 309, and the image memory unit 310 described above.

The multifunction peripheral 105 operates when the core unit 311 reads the firmware stored in the external storage device 307 and executes the read firmware.

When updating the firmware of the multifunction peripheral 105, the multifunction peripheral 105 receives the firmware from the firmware transmission apparatus 101 via the external interface unit 308, and transfers the received firmware to the core unit 311. The core unit 311 stores the received firmware in the external storage device 307 via the file unit 306.

Subsequently, if the core unit 311 receives a reboot command from the operation unit 304, or from some other network device via the external interface unit 308, the core unit 311 reads and executes the updated firmware. The firmware update is thereby completed. In addition, even if the power to the multifunction peripheral 105 is switched on/off after the updated firmware has been stored in the external storage device 307, the firmware update is completed.

Moreover, the external storage device 307 does not have to be a hard disk and may be, as long as it can hold the firmware, a non-volatile memory such as electrically erasable and programmable read-only memory (EEPROM).

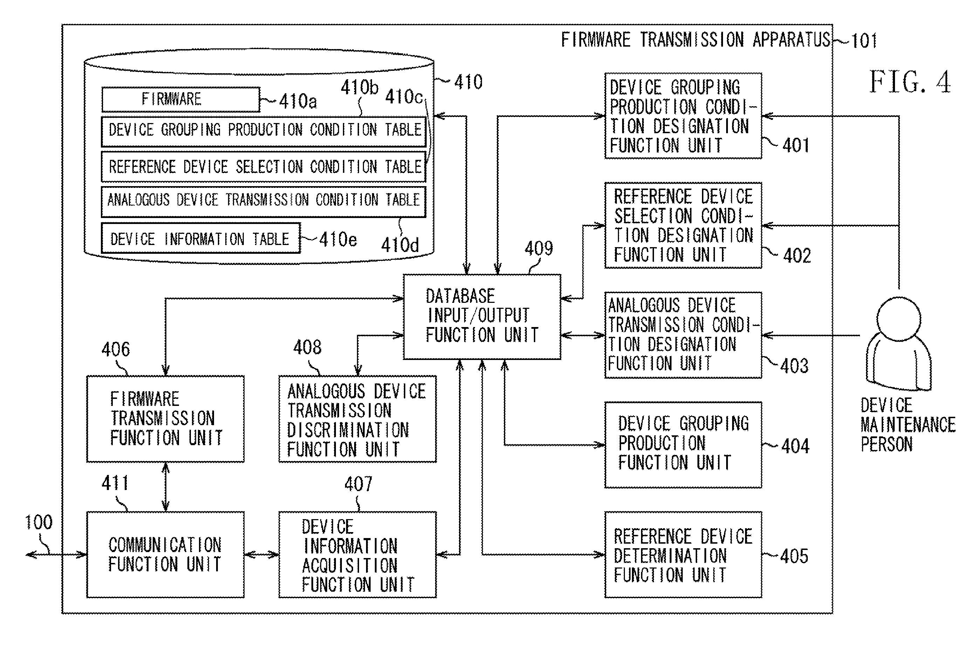

Fig. 4 is a block diagram illustrating one example of the functional configuration of the firmware transmission apparatus 101. In Fig. 4, one example of the functional configuration of the firmware transmission apparatus 101 when controlling the operation of transmitting firmware to a plurality of devices is illustrated.

In Fig. 4, the device grouping production condition designation unit 401 lets a user designate a condition (device grouping production condition) for producing a device grouping.

The reference device selection condition designation unit 402 lets a user designate a condition (reference device selection condition) for selecting the device to which firmware is to be transmitted at a first firmware transmission opportunity. In the following description, the device to which firmware is to be transmitted at a first firmware transmission opportunity may be referred to as "reference device".

The analogous device transmission condition designation unit 403 lets a user designate a transmission condition (analogous device transmission condition) of the firmware to be transmitted to a device at a second firmware transmission opportunity which comes after the first firmware transmission opportunity. In the following description, the firmware to be transmitted to a device at a second firmware transmission opportunity may be referred to as "analogous device".

Further, a device grouping production condition table 410b, which is a list of the device grouping production conditions, and a reference device selection conditions table 410c, which is a list of the reference device selection conditions, are pre-stored in a database 410. In addition, an analogous device transmission condition table 410d, which is a list of the analogous device transmission conditions, is also pre-stored in the database 410.

A device grouping production function unit 404 produces a device grouping based on the condition selected by the device grouping production condition designation unit 401.

A reference device determination function unit 405 lets a user determine the reference device based on the condition selected by the reference device selection condition designation unit 402.

A firmware transmission function unit 406 acquires the firmware and information about the device to which firmware is to be transmitted via a database input/output function unit 409, and sends the firmware to a device via a communication function unit 411.

A device information acquisition function unit 407 acquires device information which is used by the respective functional units 402 to 405 and an analogous device transmission discrimination unit 408, from the devices via the communication function unit 411.

The analogous device transmission discrimination unit 408 determines whether firmware should be transmitted to an analogous device using the condition designated by the analogous device transmission condition designation unit 403 and the device information acquired by the device information acquisition function unit 407.

The database input/output function unit 409 controls the input and output of data to the database 410. The database 410 stores various types of data.

Examples of the data stored in the database 410 include the firmware 410a, the device grouping production condition table 410b, the reference device selection conditions table 410c, the analogous device transmission condition table 410d, and a device information table 410e.

The communication function unit 411 sends the firmware to a device via the LAN 100, and receives device information.

Next, the configuration of the data stored in the database 410 will be described.

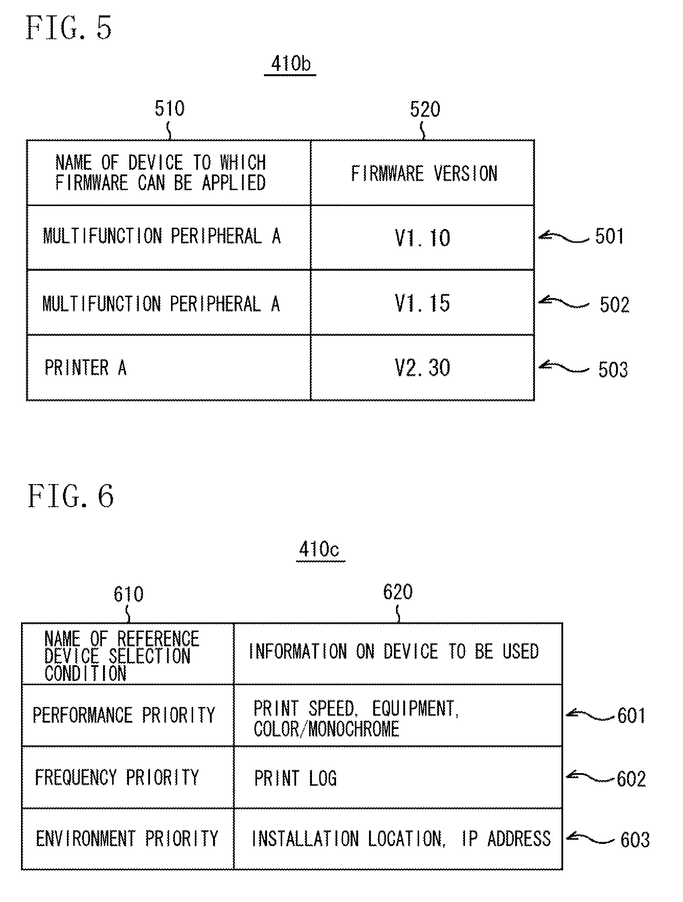

Fig. 5 is a diagram illustrating one example of the registered contents of the device grouping production condition table 410b.

In the present exemplary embodiment, information about the firmware stored in the database 410 is utilized as the device grouping production condition for producing a device grouping.

In the device grouping production condition table 410b illustrated in Fig. 5, device grouping production conditions 501 to 503 including the device name 510 to which transmission target firmware can be applied, and the firmware version information 520 are registered.

In the present exemplary embodiment, by using such a device grouping production condition table 410b, a plurality of mutually-analogous devices can be associated with each other. Further, the component elements of the device grouping production condition table 410b are not limited to the device name 510 to which transmission target firmware can be applied and the firmware version information 520. For example, device information acquired from the devices (e.g. function of the device (such as the existence of a scanner, a finisher etc.)) may also be used as a condition.

Next, the reference device selection conditions table 410c stored in the database 410 will be described.

Fig. 6 is a diagram illustrating one example of the reference device selection conditions table 410c.

In the example illustrated in Fig. 6, reference device selection conditions 601 to 603 including the name 610 of the reference device selection condition and information 620 about the device to be used are registered in the reference device selection conditions table 410c. Thus, the device information necessary for extracting the reference device is listed in the reference device selection conditions table 410c.

Although it has been assumed that device information acquired by the device information acquisition function unit 407 illustrated in Fig. 4 is used as the information 620 about the device to be used, this does not necessarily have to be the case. For example, information input by a user for each device can be held in the database 410 and used as the device information.

Next, the analogous device transmission condition table 410d stored in the database 410 will be described.

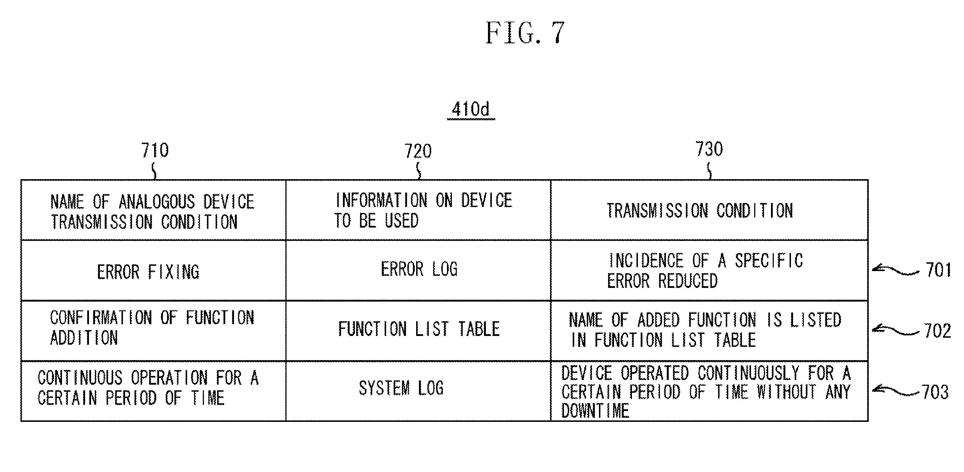

Fig. 7 is a diagram illustrating one example of the analogous device transmission condition table 410d.

The analogous device transmission condition table 410d is used to confirm whether firmware which has been transmitted to a reference device is operating correctly.

In the example illustrated in Fig. 7, analogous device transmission conditions 701 to 703 including the name 710 of the analogous device transmission condition, information 720 about the device to be used, and the transmission condition 730 are registered in the analogous device transmission condition table 410d. Here, the transmission condition 730 is a condition for transmitting the firmware to an analogous device.

Although it has been assumed that device information acquired by the device information acquisition function unit 407 illustrated in Fig. 4 is used as the information 720 about the device to be used, this does not necessarily have to be the case. For example, information input by a user for each device can be held in the database 410 and used as the device information.

Next, the device information table 410e stored in the database 410 will be described.

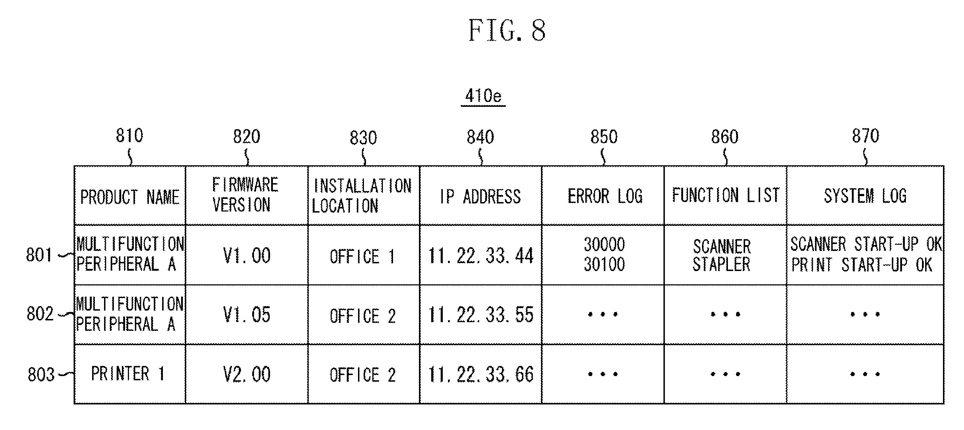

Fig. 8 is a diagram illustrating one example of the device information table 410e.

The device information table 410e is produced based on the information acquired by the device information acquisition function unit 407 illustrated in Fig. 4. In the example illustrated in Fig. 8, device information 801 to 803 including a product name 810, a firmware version 820, an installation location 830, an IP address 840, an error log 850, a list 860 of device functions, and a system log 870, are registered in the device information table 410e. The installation location 830 indicates the location where a device is located, and the IP address 840 indicates the IP address of the device. Further, the error log 850 indicates a record of the errors generated by the device, and the system log 870 indicates a record of the operating status of the system.

The component elements of the device information table 410e are not limited to those illustrated in Fig. 8. For example, in addition to those described above, a media access control (MAC) address, print speed, total number of print pages, and the like may be added as device information.

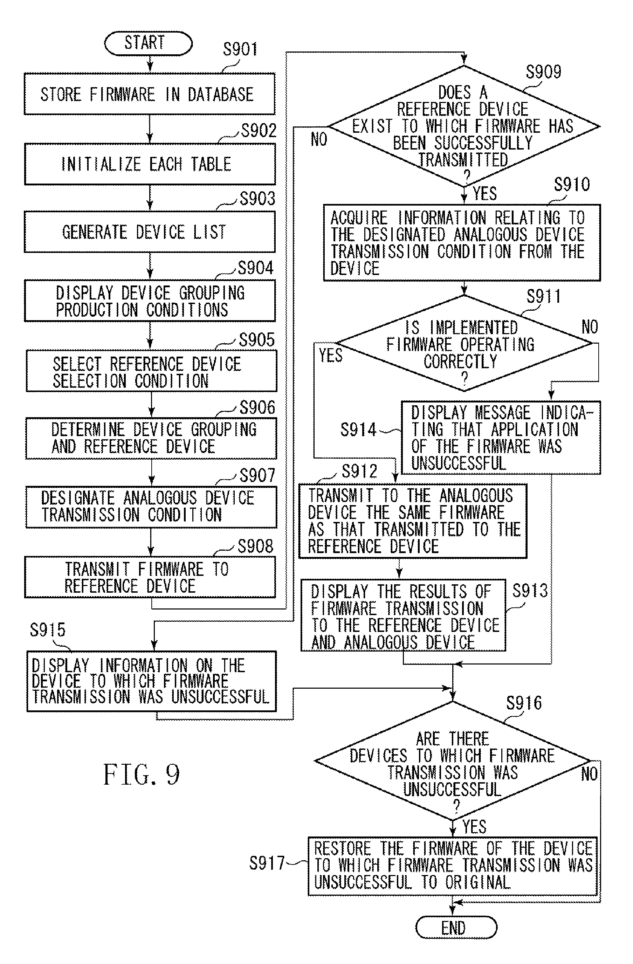

Next, one example of the operations carried out in the firmware transmission apparatus 101 during transmission of firmware to a plurality of devices will be described while referring to the flowchart of Fig. 9.

First, in step S901 of Fig. 9, the database input/output function unit 409 stores device firmware in the database 410.

The database input/output function unit 409 can store the firmware in the database 410 based on a user's instruction, or can store firmware supplied from an external firmware management apparatus (not shown) etc. in the database 410.

In a case where the firmware is supplied from a firmware management apparatus, the firmware transmission apparatus 101 may acquire the firmware by making a request to the firmware management apparatus and store the acquired firmware in the database 410. Conversely, the firmware management apparatus may spontaneously deliver the firmware to the firmware transmission apparatus 101 and the delivered firmware can be stored in the database 410. In the case of supplying the firmware from outside in such a manner, the firmware is supplied via the communication function unit 411. Further, the firmware may also be stored and supplied in a format of a recording medium such as a floppy disk, a CD-ROM, and the like.

Next, in step S902, the database input/output function unit 409 initializes each of the tables 410b to 410e stored in the database 410.

Next, in step S903, the device information acquisition function unit 407 acquires device information from the devices via the communication function unit 411. Then, the database input/output function unit 409 stores the device information acquired by the device information acquisition function unit 407 in the device information table 410e. Then, the database input/output function unit 409 generates a device list based on the registered contents in the device information table 410e. This device list will be described below. Thus, in the present exemplary embodiment, an acquisition unit is realized by performing the processing of step S903.

Next, in step S904, the device grouping production condition designation unit 401 produces a device grouping based on the device grouping production condition for producing the device grouping (device group) which was input by the user. Specifically, the device grouping production condition designation unit 401 produces a device grouping production condition based on the registered contents of the device grouping production condition table 410b, and displays the produced condition on a display device to the user. The user selects the condition to be employed from among the device grouping production conditions shown by the device grouping production condition designation unit 401. The device grouping production condition designation unit 401 receives the selected condition. Thus, in the present exemplary embodiment, a second receiving unit is realized by performing the processing of step S904.

Next, in step S905, the reference device selection condition designation unit 402 shows the user the reference device selection conditions for selecting a reference device. Specifically, the reference device selection condition designation unit 402 produces a reference device selection condition for selecting a reference device based on the registered contents of the reference device selection conditions table 410c, and displays the produced condition on a display device to the user. The user selects the condition to be employed from among the device grouping production conditions shown by the reference device selection condition designation unit 402. The reference device selection condition designation unit 402 receives the selected condition. Thus, in the present exemplary embodiment, a receiving unit is realized by performing the processing of step S905.

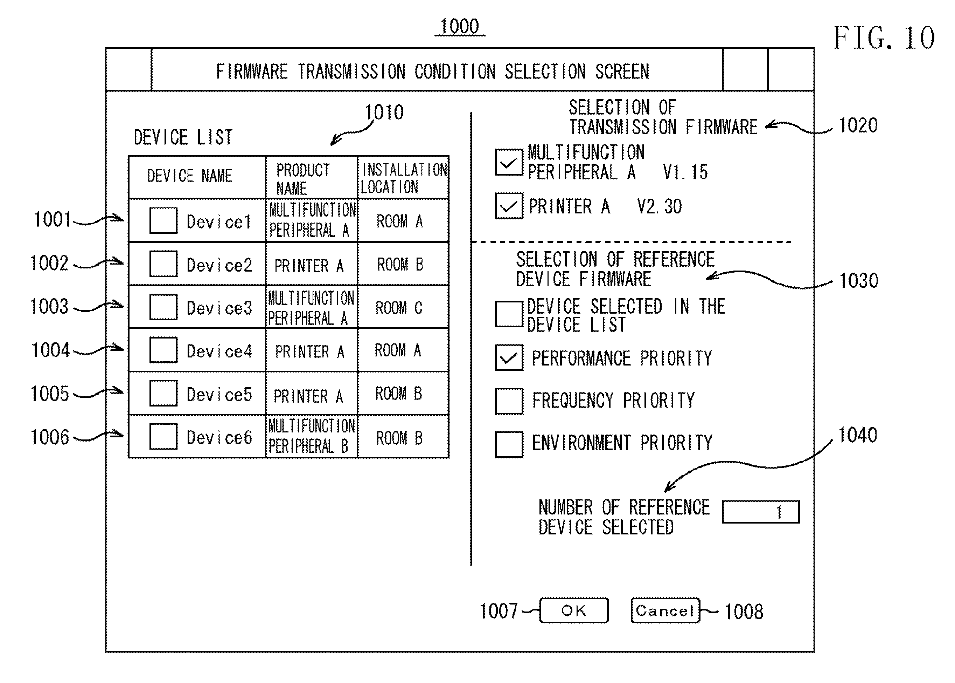

Fig. 10 is a diagram illustrating one example of the firmware transmission condition selection screen displayed in the processing of step S903 to step S905.

In Fig. 10, the firmware transmission condition selection screen 1000 displays a device list 1010 which was produced in step S903. Device information 1001 to 1006 is listed in the device list 1010.

Device information 1001 to 1006 in the device list 1010 of Fig. 10 is stored in the device information table 410e. However, information which is not stored in the device information table 410e, such as comments added by the user, may be displayed along with the device information 1001 to 1006 illustrated in Fig. 10.

Further, a device grouping production condition 1020 used for producing the device grouping in step S904 of Fig. 9 is displayed on the firmware transmission condition selection screen 1000. In Fig. 10, using the device grouping production condition table 410b, the device grouping production condition targeting the device name and version of the firmware to be transmitted is shown to the user. However, the device grouping production condition shown to the user is not limited to this. For example, a device grouping production condition targeting device function may also be stipulated.

Here, "Multifunction Peripheral A V1.15" and "Printer A V2.30" are listed as the device grouping production condition input by the user. The user ticks the boxes displayed at the head of the device grouping production condition 1020 "Multifunction Peripheral A V1.15" and "Printer A V2.30". Thus, the devices to which the applicable firmware can be transmitted are designated and extracted.

Further, a reference device selection condition 1030 used for selecting the reference device in step S905 is displayed on the firmware transmission condition selection screen 1000. In Fig. 10, a reference device selection condition (performance priority, frequency priority, environment priority) based on the registered contents of the reference device selection conditions table 410c is shown to a user. Then, in Fig. 10, along with such a reference device selection condition, a selection alternative ("device selected in the device list") for allowing a user to select a reference device from the device list 1010 is also shown. While a user can select the reference device from the device list 1010 in the present embodiment, this does not necessarily have to be the case. For example, the user can designate a reference device without using the device list 1010, by directly inputting information for identifying a device (IP address, MAC address, device serial number and the like) in the firmware transmission condition selection screen 1000.

In Fig. 10, "performance priority" is illustrated as an example of the reference device selection condition selected by the user. When "performance priority" is selected, for example, selection of the reference device is made in order of devices having relatively high performance based on the conditions of print speed, equipment, and color/monochrome described in the information 620 about the device to be used illustrated in Fig. 6.

Further, the number of selectable reference devices 1040 is displayed on the firmware transmission condition selection screen 1000. By the number of selectable reference devices 1040, the user can designate the number of reference devices to be selected by the reference device selection condition 1030.

In addition, an "OK" button 1007 and a "CANCEL" button 1008 are also displayed on the firmware transmission condition selection screen 1000. The "OK" button 1007 ("CANCEL" button 1008) has the function of confirming (rejecting) the input made by the user to the firmware transmission condition selection screen 1000.

When the inputs made by the user on such firmware transmission condition selection screen 1000 are received and the "OK" button 1007 is pressed, the firmware transmission apparatus 101 executes step S906.

In step S906, the reference device determination function unit 405 determines a reference device using the information (conditions) input by the user on the firmware transmission condition selection screen 1000. Further, the device grouping production function unit 404 determines (produces) a device grouping using the information (conditions) input by the user on the firmware transmission condition selection screen 1000. The device grouping includes one or more reference devices and zero or more analogous devices.

Here, the operations of step S906 will be described in more detail.

The database input/output function unit 409 acquires the data input by the user on the firmware transmission condition selection screen 1000 from the device grouping production condition designation unit 401 and the reference device selection condition designation unit 402. Then, the database input/output function unit 409 temporarily stores the acquired data in the database 410.

Next, the device grouping production function unit 404 acquires the data and device information concerning the device grouping production condition from among the temporarily-stored data via the database input/output function unit 409, and based on the acquired information, produces a device grouping.

Further, the device grouping production function unit 404 temporarily stores the produced device grouping data in the database 410 via the database input/output function unit 409. At this stage, there is no distinction of reference devices and analogous devices among the devices included in the produced device grouping.

Similarly, the reference device determination function unit 405 acquires the data and device information concerning the device grouping selection condition from among the above-described temporarily-stored data via the database input/output function unit 409, and based on the acquired information, determines a reference device.

The number of reference devices determined here is the same as the value designated by the number of selectable reference devices 1040 in Fig. 10. However, if the number of elements in the device grouping is less than the value designated by the number of selectable reference devices 1040, the number of devices which are selected here is the same as the number of devices in the device grouping.

After the device grouping and the reference devices are determined in this manner, if the "OK" button 1007 on the firmware transmission condition selection screen 1000 is pressed by the user, the firmware transmission apparatus 101 executes step S907.

Thus, in the present exemplary embodiment, a determination unit and a production unit are realized by performing the processing of step S906.

In step S907, the analogous device transmission condition designation unit 403 displays the analogous device transmission conditions which are designated by the user on the display device, and prompts the user to input an analogous device transmission condition. Then, the analogous device transmission condition designation unit 403 receives the input value of the analogous device transmission condition input by the user, and temporarily stores the received input value in the database 410 via the database input/output function unit 409.

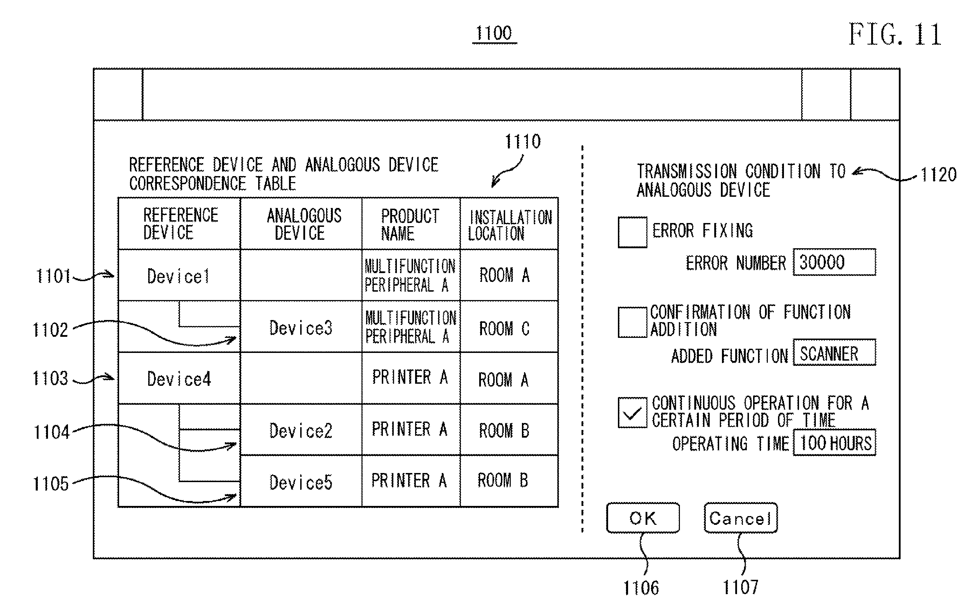

Fig. 11 is a diagram illustrating one example of the device grouping display screen displayed in step S907.

In Fig. 11, a device grouping list 1110 is displayed on a device grouping display screen 1100. This device grouping list 1110 displays a list of the device groupings produced (determined) in step S906 of Fig. 9. In the example illustrated in Fig. 11, two device groupings are illustrated. One device grouping is formed from devices 1101 and 1102 and another device grouping is formed from devices 1103, 1104, and 1105.

These device groupings were produced by the device grouping production function unit 404 based on the device grouping production condition input by the user in step S904. More specifically, the device grouping production function unit 404 refers to the device information table 410e, and produces a device grouping which brings together devices that match the condition of "Multifunction Peripheral A V1.15" or "Printer A V2.30" designated by the device grouping production condition 1020 of Fig. 10.

Further, in the example illustrated in Fig. 11, the devices 1101 and 1103 are reference devices, and devices 1102, 1104, and 1105 are analogous devices.

The reference devices 1101 and 1103 are selected by the reference device determination function unit 405 based on the reference device selection condition input by the user in step S905. More specifically, the reference device determination function unit 405 refers to the reference device selection conditions table 410c and the device information table 410e. Then, the reference device determination function unit 405 selects the devices which match the condition of "performance priority" designated by the reference device selection condition 1030 illustrated in Fig. 10. The number of selected devices is the value designated by the number of selectable reference devices 1040 as the reference devices.

Since the device 1006 illustrated in Fig. 10 is not found in the device grouping production condition 1020, the device 1006 is not displayed on the device grouping display screen 1100 of Fig. 11.

Further, an analogous device transmission condition 1120 is displayed on the device grouping display screen 1100. In the example illustrated in Fig. 11, an analogous device transmission condition based on the registered contents of the analogous device transmission condition table 410d is shown.

The user selects any one of "ERROR FIXING", "CONFIRMATION OF FUNCTION ADDITION", and "CONTINUOUS OPERATION FOR A CERTAIN PERIOD OF TIME" according to the analogous device transmission condition which the user desires, and inputs the details about the selected analogous device transmission condition. In the example illustrated in Fig. 11, the user has selected "CONTINUOUS OPERATION FOR A CERTAIN PERIOD OF TIME" and "OPERATING TIME 100 HOURS" as the analogous device transmission condition. More specifically, in the example illustrated in Fig. 11, the user has selected as the analogous device transmission condition that the firmware be transmitted to the analogous device as well if, after the firmware has been transmitted to the reference device, that reference device has operated continuously for 100 hours without any downtime.

The "ERROR FIXING", "CONFIRMATION OF FUNCTION ADDITION", and "CONTINUOUS OPERATION FOR A CERTAIN PERIOD OF TIME" displayed as the analogous device transmission condition 1120 are the same as what is stored in the analogous device transmission condition 710 of the analogous device transmission condition table 410d.

In addition, an "OK" button 1106 and a "CANCEL" button 1107 are displayed on the device grouping display screen 1100. The "OK" button 1106 ("CANCEL" button 1107) has the function of confirming (rejecting) the input made by the user to the device grouping display screen 1100. If the "OK" button 1106 is pressed by the user, the firmware transmission apparatus 101 transmits the firmware to the reference device. The firmware transmission apparatus 101 acquires the device information registered in the "information 720 on the device to be used" of the analogous device transmission condition table 410d, from the reference device to which the firmware was transmitted, based on the analogous device transmission condition selected by the user.

Thus, in the present exemplary embodiment, a third receiving unit is realized by performing the processing of step S907.

Returning to the description of Fig. 9, when the inputs made by the user are received on the device grouping display screen 1100, and the "OK" button 1106 is pressed, the firmware transmission apparatus 101 executes step S908.

In step S908, based on the information input into the device grouping display screen 1100 by the user, the firmware transmission function unit 406 instructs the communication function unit 411 to transmit the firmware to the reference devices. As a result, the firmware is transmitted to the reference devices.

In the examples of Figs. 10 and 11, the firmware "Multifunction Peripheral A V1.15" is transmitted to Device 1 and the firmware "Printer A V2.30" is transmitted to Device 4.

Thus, in the present exemplary embodiment, a first transmission unit is realized by performing the processing of step S908. In step S908, the firmware transmission apparatus 101 may also display the results of the transmission of firmware to the reference devices on a display device to the user.

Next, in step S909, the device information acquisition function unit 407 determines whether a reference device to which firmware has been successfully transmitted exists based on information sent from the reference devices. As a result of this determination in step S909, if no reference device to which firmware has been successfully transmitted exists (NO in step S909), the processing proceeds to step S915, which is described below. On the other hand, if a reference device to which firmware has been successfully transmitted does exist (YES in step S909), the processing proceeds to step S910.

When the processing proceeds to step S910, the device information acquisition function unit 407 acquires the input value of the analogous device transmission condition designated by the user in step S907 from the database 410 via the database input/output function unit 409. In addition, the device information acquisition function unit 407 refers to the "information 720 on the device to be used" of the analogous device transmission condition table 410d which indicates the acquired input value.

In the example illustrated in Fig. 11, "CONTINUOUS OPERATION FOR A CERTAIN PERIOD OF TIME" and "OPERATING TIME 100 HOURS" are designated. Therefore, the device information acquisition function unit 407 acquires the system log based on the entry in the "information 720 on the device to be used" of the analogous device transmission condition table 410d.

Supposing that, in the device grouping display screen 1100 illustrated in Fig. 11, "ERROR FIXING" and "ERROR NUMBER: 30000" are selected by the user, the device information acquisition function unit 407 acquires the error log based on the entry in the "information 720 on device to be used" of the analogous device transmission condition table 410d. Further, supposing that, in the device grouping display screen 1100 illustrated in Fig. 11, "CONFIRMATION OF FUNCTION ADDITION" and "ADDED FUNCTION: SCANNER" are selected by the user, the device information acquisition function unit 407 acquires the function list table based on the entry in the "information 720 on the device to be used" of the analogous device transmission condition table 410d.

Next, in step S911, the analogous device transmission discrimination unit 408 analyzes the device information acquired in step S910, and determines whether the firmware implemented in a reference device is operating correctly.

For example, if "CONTINUOUS OPERATION FOR A CERTAIN PERIOD OF TIME" and "OPERATING TIME 100 HOURS" are selected in step S910, the analogous device transmission discrimination unit 408 determines in the following manner whether the firmware implemented in a reference device is operating correctly. More specifically, the analogous device transmission discrimination unit 408 confirms that a reference device has been continuously operating for 100 hours based on the system log which is regularly acquired from the reference device, and determines whether the firmware implemented in the reference device is operating correctly. In this system log, the time and details of events which have occurred in the device are recorded point-by-point. Therefore, the analogous device transmission discrimination unit 408 can determine whether the firmware implemented in a reference device is operating correctly by confirming that there have been no device stoppage events in the system log during the 100 hours from the time of the device start-up event.

Further, in step S910, if "ERROR FIXING" and "ERROR NUMBER: 30000" are selected by the user, the analogous device transmission discrimination unit 408 searches for an entry relating to "ERROR NUMBER: 30000" from the regularly acquired error log. In this error log, the time and details of errors which have occurred in the device are recorded point-by-point. Therefore, the analogous device transmission discrimination unit 408 can determine whether the firmware implemented in a reference device is operating correctly by confirming that no "ERROR NUMBER: 30000" errors are included in the error log or that the frequency of such errors is decreasing.

Further, in step S910, if "CONFIRMATION OF FUNCTION ADDITION" and "ADDED FUNCTION: SCANNER" are selected, the analogous device transmission discrimination unit 408 searches for an entry relating to the scanner from the regularly acquired function list table. In this function list table, a list of the functions that a device has is listed.

The analogous device transmission discrimination unit 408 confirms that "SCANNER" is included in the acquired function list table. Here, if a plurality of reference devices exist in one device grouping, the analogous device transmission discrimination unit 408 determines whether the implemented firmware is operating correctly in all of the reference devices.

Referring back to step S911, the analogous device transmission discrimination unit 408 analyzes the device information acquired in step S910 for each reference device, and based on the analyzed results, determines whether the implemented firmware is operating correctly in each reference device. Then, if it is determined that the implemented firmware is operating correctly in all of the reference devices (YES in step S911), the processing proceeds to step S912. On the other hand, if in at least one reference device it is not determined that the implemented firmware is operating correctly (NO in step S911), the processing proceeds to step S914.

Thus, in the present exemplary embodiment, a confirmation unit is realized by performing the processing of steps S909 to S911.

When the processing proceeds to step S912, the firmware transmission function unit 406 instructs the communication function unit 411 to transmit to an analogous device connected to the reference device in which the implemented firmware is determined to be operating correctly, the same firmware as that transmitted to the reference device. As a result, the firmware is transmitted to the analogous device.

Thus, in the present exemplary embodiment, a second transmission unit is realized by performing the processing of step S912.

More specifically, the firmware transmission function unit 406 searches for the device grouping which a reference device belongs to based on the data temporarily stored in the database 410 in step S906. Next, the firmware transmission function unit 406 acquires from the database 410 information about the analogous device belonging to this device grouping, and transmits to that analogous device the same firmware as that transmitted to the reference device. Then, the processing proceeds to step S913.

Next, in step S913, the firmware transmission apparatus 101 displays the results of the transmission of firmware to the analogous device on the display device to the user. Then, the processing proceeds to step S916, which will be described below.

In step S911, if in at least one reference device it is not determined that the implemented firmware is operating correctly (NO in step S911), the processing proceeds to step S914. In step S914, the firmware transmission apparatus 101 displays on the display 210 a message to show the user that application of the firmware to the reference device was unsuccessful, and that firmware is not to be transmitted to the analogous device connected to this reference device. Then, the processing proceeds to step S916.

In step S909, if a reference device to which the firmware has been successfully transmitted exists (NO in step S909), the processing proceeds to step S915. In step S915, the firmware transmission apparatus 101 displays on the display 210 information about the reference device to which the firmware was unsuccessfully transmitted and on the analogous device connected to this reference device to the user. Then, the processing proceeds to step S916.

In step S916, the firmware transmission function unit 406 determines whether there are any devices (reference devices, analogous devices) to which the firmware was unsuccessfully transmitted in steps S913 to S915. As a result of this determination in step S916, if there are any devices (reference devices, analogous devices) to which the firmware was unsuccessfully transmitted (YES in step S916), the processing proceeds to step S917. In step S917, the firmware transmission function unit 406 restores the firmware of the device to which firmware was unsuccessfully transmitted to its original state prior to the processing of the flowchart of Fig. 9.

More specifically, if the device has a function for restoring the firmware to its original state prior to the processing of the flowchart of Fig. 9, the firmware transmission function unit 406 instructs the communication function unit 411 to send to the device a command for restoring the firmware to its original state. As a result, the command for restoring the firmware to its original state is sent to the device to which firmware was unsuccessfully transmitted, and the firmware of that device is restored to its original state.

On the other hand, if the device does not have a function for restoring the firmware to its original state prior to the processing of the flowchart of Fig. 9, the firmware transmission function unit 406 refers to the "FIRMWARE VERSION 820" of the analogous device transmission condition table 410d. Then, the firmware transmission function unit 406 instructs the communication function unit 411 to send to the device the version of the firmware which was applied prior to performing the processing of the flowchart of Fig. 9. As a result, a version of the firmware which was applied prior to performing the processing of the flowchart of Fig. 9 is sent to the device to which firmware was unsuccessfully transmitted, and the firmware of that device is restored to its original state. The processing of the flowchart of Fig. 9 is thereby finished.

An example of a method for acquiring the version of the firmware which was applied prior to performing the processing of the flowchart of Fig. 9 is to acquire the firmware version described in the "FIRMWARE VERSION 820" from a not-shown firmware management apparatus. Further, the version of the firmware which was applied prior to performing the processing of the flowchart of Fig. 9 may be acquired in advance by obtaining a backup of the firmware from the device before transmitting the firmware in step S908 and step S912.

Thus, in the present exemplary embodiment, a determination unit is realized by performing the processing of step S916, and a state change unit and a second state change unit are realized by performing the processing of step S917.

In step S916, if it is determined that there are no devices (reference devices, analogous devices) to which firmware was unsuccessfully transmitted in steps S913 to S915 (NO in step S916), there is no need to restore the firmware applied to a device to its original state. Therefore, the processing of the flowchart of Fig. 9 ends without performing step S917.

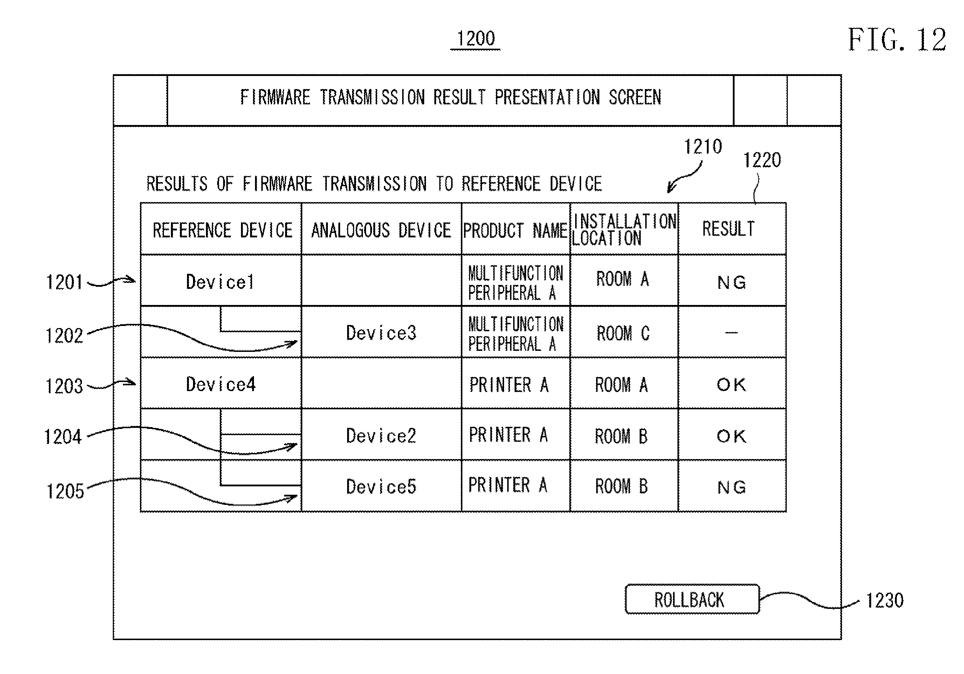

Fig. 12 is diagram illustrating one example of a firmware transmission result presentation screen displayed in the processing from step S913 to step S916.

In Fig. 12, a device grouping list 1210 is displayed on the firmware transmission result presentation screen 1200. Except that a firmware transmission result display region 1220 is added, this device grouping list 1210 is the same as the device grouping list 1110 illustrated in Fig. 11. More specifically, the devices 1201 to 1205 registered in the device grouping list 1210 are the same as the devices 1101 to 1105 illustrated in Fig. 11.

The firmware transmission result display region 1220 is unique to the firmware transmission result presentation screen 1200. In the present exemplary embodiment, by performing the processing of step S913 to step S915, a value is stored in the firmware transmission result display region 1220. More specifically, the following operation is carried out.

In the example illustrated in Fig. 12, either the transmission of firmware to the reference device Device 1 was unsuccessful, or the firmware applied to the Device 1 did not operate correctly. Therefore, "NG" is displayed in the firmware transmission result display region 1220 of the reference device Device 1 (step S915 or step S914).

The analogous device Device 3 is connected to the reference device Device 1, and "NG" is displayed in the firmware transmission result display region 1220 of the Device 1. Therefore, "-" is displayed in the firmware transmission result display region 1220 of the analogous device Device 3 (step S915 or step S914).

The transmission of firmware to the reference device Device 4 was successful, and the firmware applied to Device 4 operated correctly. Therefore, "OK" is displayed in the firmware transmission result display region 1220 of the reference device Device 4 (step S913).

The analogous device Device 2 is connected to the reference device Device 4, and "OK" is displayed in the firmware transmission result display region 1220 of Device 4. Further, the transmission of firmware to the analogous device Device 2 was successful. Therefore, "OK" is displayed in the firmware transmission result display region 1220 of the analogous device Device 2 (step S913).

The analogous device Device 5 is connected to the reference device Device 4, and "OK" is displayed in the firmware transmission result display region 1220 of Device 4. However, the transmission of firmware to the analogous device Device 5 was unsuccessful. Therefore, "NG" is displayed in the firmware transmission result display region 1220 of the analogous device Device 5 (step S913).

In addition, a "ROLLBACK" button 1230 is displayed on the firmware transmission result presentation screen 1200. The "ROLLBACK" button 1230 allows a user to instruct that the processing of step S917 of Fig. 9 be executed. More specifically, the user pushes the "ROLLBACK" button 1230 when restoring the firmware of a device for which "NG" is displayed in the firmware transmission result display region 1220 to its original state prior to the processing of the flowchart of Fig. 9.

Thus, in the present exemplary embodiment, a display unit is realized by performing the processing for displaying the firmware transmission result presentation screen 1200 illustrated in Fig. 12.

As described above, in the present exemplary embodiment, firmware is transmitted to one or more reference devices, and after confirming that the firmware is operating correctly in the reference devices, the same firmware as that transmitted to the reference devices is transmitted to an analogous device. Therefore, firmware updates can be carried out appropriately and reliably. Further, since a user only has to confirm that the firmware sent to the reference devices is operating correctly, the burden placed on the user when updating firmware can be reduced. Therefore, while reducing the burden placed on a user, firmware updates can be carried out expeditiously and reliably.

Further, the firmware transmission apparatus 101 in the present exemplary embodiment not only transmits firmware, but also has functions such as storage of the firmware and acquisition of the device information. However, it is not necessary to carry out these functions in a single apparatus. The respective functions may be assigned to a firmware management apparatus, a device information acquisition apparatus and the like.

Further, in the present exemplary embodiment, the firmware transmission condition selection screen 1000 and the device grouping display screen 1100 were displayed on different screens. However, these two screens may be merged into a single screen. In such a case, the "OK" button 1007 and "CANCEL" button 1008 of Fig. 10 and the device grouping list 1110 of Fig. 11 are not displayed.

### Other Exemplary Embodiments

Each of the units configuring the transmission apparatus and each of the steps of the transmission method in the above-described exemplary embodiment can be realized by the operation of a program stored in the RAM, ROM etc. of a computer. Such a program and a computer-readable recording medium on which this program is stored are included in the scope of the present invention.

Further, the present invention can also be embodied as a system, apparatus, method, program, or storage medium. Further, the present invention may be applied to a system configured of a plurality of devices, or in an apparatus configured of one device.

Further, the present invention supplies a software program for realizing the functions of the above-described exemplary embodiment (in such an exemplary embodiment, a program corresponding to the flowchart illustrated in Fig. 9) to a system or an apparatus either directly or remotely. The present invention also includes embodiments which are realized by a computer of such system or apparatus reading and executing the supplied program code.

Therefore, to realize the functional processing of the exemplary embodiment according to the present invention with a computer, the program code itself which is installed in the computer also realizes the present invention. Namely, the computer program for realizing the functional processing of the exemplary embodiment according to the present invention is itself included in the present invention.

In this case, the program may be an object code, a program executed by an interpreter, script data supplied to an OS and the like, as long as they have the function of a program.

Examples of the recording medium for supplying the program include a floppy disk, a hard disk, an optical disk, a magneto-optical (MO) disk, a compact disc - ROM (CD-ROM), a CD-recordable (CD-R), a CD-rewritable (CD-RW), and the like. Other examples include a magnetic tape, a non-volatile memory, a ROM, a digital versatile disk (DVD) (DVD-ROM, DVD-R), and the like.

In addition, an example of a method for supplying the program includes using a browser of a client computer to connect to an Internet webpage. The computer program itself according to the present invention, or a compressed file containing an auto-install function, can also be supplied from the webpage by downloading onto a recording medium, such as a hard disk.

Further, the present invention can also be realized by dividing the program code constituting the program of the exemplary embodiment according to the present invention into a plurality of files, and downloading each of those files from different webpages. Namely, a World Wide Web (WWW) server which allows a plurality of users to download the program files for realizing the functional processing of the exemplary embodiment according to the present invention by a computer is also included in the present invention.

Further, the present invention may be realized by encrypting the program according to the exemplary embodiment of the present invention, storing the encrypted program on a recording medium such as a CD-ROM, and distributing the recording medium to a user. In this case, a user satisfying certain conditions is allowed to download key information for unlocking the encryption from a webpage via the Internet, so that by using that key information the encrypted program is installed on a computer in an executable format.

Further, the functions of the exemplary embodiment can be realized by having a computer execute a read program. In addition, the functions of the exemplary embodiment can be realized also by having the OS operating on the computer perform all or part of the actual processing based on an instruction from the program.

In addition, the present exemplary embodiment may be realized by writing a program read from a recording medium into a memory which is provided on a function expansion board inserted into a computer or a function expansion unit connected to the computer. Subsequently, based on an instruction from that program, a CPU etc. provided on that function expansion board or function expansion unit performs all or part of the actual processing.

According to the exemplary embodiment of the present invention, software is transmitted to a device, and after that transmission is confirmed to have been successful, software is transmitted to other devices. Therefore, the transmission of the software can be carried out expeditiously and appropriately. Further, by transmitting in such a manner, a user just has to confirm whether the transmission was successful. Therefore, the burden placed on the user when updating software, such as firmware, to a plurality of devices can be reduced, and the transmission of such software can be carried out expeditiously and appropriately.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures, and functions.

## Claims

1. A transmission apparatus (101) comprising:
a first transmission means configured to transmit software to a device;
a confirmation means configured to confirm that transmission of the software was successful based on information received from the device to which the software was transmitted by the first transmission means; and
a second transmission means configured to, after the transmission of the software was confirmed to have been successful by the confirmation means, transmit the software to a device which is different from the device to which the software was transmitted by the first transmission means.

2. The transmission apparatus (101) according to claim 1, wherein the second transmission means is configured to transmit the software to devices which are associated with each other as being analogous to the device to which the software was transmitted by the first transmission means.

3. The transmission apparatus (101) according to claim 1 or 2, further comprising:
a receiving means configured to receive a designation of a condition for selecting a device to which software is to be transmitted by the first transmission means; and
a determination means configured to determine a device to which software is to be transmitted by the first transmission means based on the condition received by the receiving means,
wherein the first transmission means is configured to transmit the software to the device determined by the determination means.

4. The transmission apparatus (101) according to claim 3, further comprising:
an acquisition means configured to acquire information concerning a device from that device,
wherein the receiving means is configured to receive a designation of a condition for selecting the device to which software is to be transmitted by the first transmission means from among a plurality of conditions based on the information acquired by the acquisition means.

5. The transmission apparatus (101) according to any preceding claim, further comprising:
a second receiving means configured to receive a designation of a condition for producing a device group to which the software is to be transmitted by the second transmission means; and
a production means configured to produce the device group to which the software is to be transmitted based on the condition received by the second receiving means,
wherein the second transmission means is configured to transmit the software to a device among a group of devices which is different from the device to which the software was transmitted by the first transmission means.

6. The transmission apparatus (101) according to claim 5, wherein the second receiving means is configured to receive a designation of the condition for producing the device group to which the identical software is to be transmitted from among a plurality of conditions based on version information of the software of a transmission target.

7. The transmission apparatus (101) according to claim 5 or claim 6, further comprising:
an acquisition means configured to acquire information concerning a device from that device,
wherein the second receiving means is configured to receive a designation of the condition for producing the device group to which the software is to be transmitted from among a plurality of conditions based on information acquired by the acquisition means.

8. The transmission apparatus (101) according to any preceding claim, further comprising:
a third receiving means configured to receive a designation of a condition for transmitting software by the second transmission means
wherein the confirmation means is configured to confirm that the transmission of the software by the first transmission means was successful by confirming that a condition received by the third receiving means is satisfied, based on information received from the device to which software was transmitted by the first transmission means.

9. The transmission apparatus (101) according to claim 8, further comprising:
an acquisition means configured to acquire information concerning a device from that device,
wherein the third receiving means is configured to receive the designation of the condition for transmitting software by the second transmission means from among a plurality of conditions based on information acquired by the acquisition means.

10. The transmission apparatus (101) according to any preceding claim, further comprising:
a state change means configured to restore, when transmission of the software to a device by the first transmission means is not confirmed to have been successful by the confirmation means, a state of that device to the state prior to the transmission of the software.

11. The transmission apparatus (101) according to any preceding claim, further comprising:
a determination means configured to determine whether transmission of the software to a device by the second transmission means was successful; and
a second state change means configured to restore, when the transmission of the software by the second transmission means is determined by the determination means to have been unsuccessful, a state of that device to the state prior to the transmission of the software.

12. The transmission apparatus (101) according to any preceding claim, further comprising:
a display means configured to display at least one of a transmission result of the software by the first transmission means and a transmission result of the software by the second transmission means.

13. A transmission method comprising:
transmitting software to a first device;
confirming that transmission of the software was successful based on information received from the first device; and
after confirming that the transmission of the software to the first device was successful, transmitting the software to a further device which is different from the first device.

14. A computer program which, when loaded onto a computer, causes the computer to become a transmission apparatus according to any one of claims 1 to 12.

15. A storage medium storing a program according to claim 14.

16. Software transmission apparatus (101) comprising:
transmitting means for transmitting an item of software to a plurality of different devices; and
control means operable to cause the transmitting means to transmit such a software item to a first such device and, in the event that confirmation of successful transmission of the item is received from the first device, to cause the transmitting means to transmit the same software item to a further such device.
